# EUROPÄISCHE PATENTSCHRIFT

(11) **EP 3 300 648 B1**
(45) Veröffentlichungstag und Bekanntmachung des Hinweises auf die Patenterteilung: **26.02.2020**
(21) Anmeldenummer: 17192561.3
(22) Anmeldetag: 22.09.2017
(51) Int. Cl.: A47L 9/28, A01D 34/00

(54) **REINIGUNGSROBOTER MIT EINER EINRICHTUNG ZUR DETEKTION EINER KOLLISION**
CLEANING ROBOT WITH A DEVICE FOR COLLISON DETECTION
ROBOT DE NETTOYAGE AVEC UN DISPOSITIF DE DETECTION D'UNE COLLISION

(30) Priorität: 30.09.2016 DE 102016118650
(43) Veröffentlichungstag der Anmeldung: 04.04.2018
(73) Patentinhaber: Vorwerk & Co. Interholding GmbH, 42275 Wuppertal (DE)
(72) Erfinder: Windorfer, Harald, 40822 Mettmann (DE)
(74) Vertreter: Müller, Enno

(56) Entgegenhaltungen:
- EP-A2- 2 159 659
- DE-A1- 10 242 257
- DE-A1-102013 106 294
- NL-C1- 1 022 340

## Beschreibung

### Gebiet der Technik

Die Erfindung betrifft ein sich selbsttätig fortbewegendes Flächenbearbeitungsgerät, insbesondere einen Reinigungsroboter, mit einem Gerätegehäuse und einer Kollisionsdetektionseinrichtung zur Detektion einer Kollision des Flächenbearbeitungsgerätes mit einem Hindernis, wobei die Kollisionsdetektionseinrichtung mindestens einen berührungssensitiven Kontaktsensor aufweist, wobei der berührungssensitive Kontaktsensor ein Vertikalkontaktsensor ist, welcher so an dem Gerätegehäuse angeordnet ist, dass dessen Detektionsbereich bei einer üblichen Orientierung des Flächenbearbeitungsgerätes während einer Fortbewegung vertikal ausgerichtet ist, so dass der Vertikalkontaktsensor zur Detektion einer vertikal auf das Flächenbearbeitungsgerät wirkenden Kraft ausgebildet ist.

### Stand der Technik

Sich selbsttätig fortbewegende Flächenbearbeitungsgeräte sind hinreichend bekannt. Diese dienen insbesondere im Haushaltsbereich zur Bearbeitung einer Fläche, insbesondere zum Absaugen und/ oder Wischen von Bodenbelägen.

Derartige Flächenbearbeitungsgeräte verfügen zur Orientierung inner-halb einer Umgebung beispielsweise über eine Abstandsmesseinrichtung, welche Abstände zu Hindernissen innerhalb der Umgebung misst. Aus den gemessenen Abstandswerten und darüber hinaus gegebenenfalls Messwerten weiterer Sensoren wird eine Umgebungskarte erstellt, welche zur Navigation und Selbstlokalisierung des Flächenbearbeitungsgerätes innerhalb der Umgebung verwendet wird. Darüber hinaus dient die Abstandsmesseinrichtung auch zur Detektion von Hindernissen innerhalb eines Verfahrweges des Flächenbearbeitungsgerätes, so dass Hindernisse innerhalb der Umgebung unter Vermeidung einer Kollision umfahren werden können. Für eine Messung nutzt die Abstandsmesseinrichtung beispielsweise ein Triangulationsmessverfahren, bei welchem Lichtsignale von einer Lichtquelle ausgesendet werden. Die an einem Hindernis reflektierten Lichtsignale werden anschließend von einem Sensor der Abstandsmesseinrichtung empfangen und bevorzugt innerhalb des Flächenbearbeitungsgerätes verarbeitet. In Abhängigkeit von dem Verarbeitungsergebnis wird ein Steuersignal generiert, beispielsweise zum Stoppen einer Fortbewegung des Flächenbearbeitungsgerätes und/oder zum Einleiten eines Ausweichmanövers oder dergleichen.

Die Veröffentlichung DE 10 2013 106 294 A1 offenbart beispielsweise ein Flächenbearbeitungsgerät mit einer Abstandsmesseinrichtung, welche durch einen oberseitig an dem Gerätegehäuse ausgebildeten Gehäuseteil geschützt ist, der einen Kontaktsensor aufweist. Der Kontaktsensor kann eine Kollision des Gehäuseteils mit einem Hindernis in horizontaler Fortbewegungsrichtung detektieren. Hierdurch kann ein Aufprall des Flächenbearbeitungsgerätes, nämlich des vorgenannten Gehäuseteils, auf ein vor der Abstandsmesseinrichtung befindliches Hindernis detektiert werden. Der Verfahrweg des Flächenbearbeitungsgerätes kann daraufhin so geändert werden, dass das Flächenbearbeitungsgerät das Hindernis umfährt und somit ein Schaden an der Abstandsmesseinrichtung verhindert wird.

Die Veröffentlichung NL 1022340 C1 offenbart eine Hindernisdetektionseinrichtung, bei welcher ein Anstoßen von Hindernissen an einer Oberseite einer flexiblen Kappe eines mit der Hindernisdetektionseinrichtung ausgestatteten Gerätes detektiert werden kann. Hierzu weißt die Hindernisdetektionseinrichtung einen Kontaktsensor auf, der sowohl vertikale als auch frontale Stöße messen kann. Die Veröffentlichung DE 102 42 257 A1 offenbart ein selbsttätig fortbewegendes Flächenbearbeitungsgerät nach dem Oberbegriff des unabhängigen Anspruchs 1.

### Zusammenfassung der Erfindung

Ausgehend von dem vorgenannten Stand der Technik ist es Aufgabe der Erfindung, ein Flächenbearbeitungsgerät, welches vor vertikalen Stößen geschützt ist, vorteilhaft weiterzubilden.

Zur Lösung der vorgenannten Aufgabe wird vorgeschlagen, dass die Kollisionsdetektionseinrichtung zwei relativ zueinander bewegliche Gehäuseteile aufweist, von welchen zumindest einer sich ringförmig innerhalb einer horizontalen Ebene erstreckend ausgebildet ist, wobei eine zur Messung von Abständen zu Hindernissen ausgebildete Abstandsmesseinrichtung in eine vertikale Richtung betrachtet inner-halb der Ringform angeordnet ist.

Erfindungsgemäß wird vorgeschlagen, dass zumindest einer von zwei relativ zueinander beweglichen Gehäuseteilen der Kollisationsdetektionseinrichtung sich ringförmig innerhalb einer horizontalen Ebene erstreckend ausgebildet ist, wobei eine zur Messung von Abständen zu Hindernissen ausgebildete Abstandsmesseinrichtung in eine vertikale Richtung betrachtet innerhalb der Ringform angeordnet ist. Insbesondere kann die Abstandsmesseinrichtung bezogen auf die vertikale Richtung insbesondere unterhalb des ringförmigen Gehäuseteils angeordnet sein. Durch diese Ausgestaltung ist es möglich, eine an dem Flächenbearbeitungsgerät angeordnete Abstandsmesseinrichtung durch einen oder beide Gehäuseteile vor einem Kontakt mit einem Hindernis zu schützen. Die Abstandsmesseinrichtung ist dabei vorzugsweise zentral auf einer Symmetrieachse der Ringform, d. h. bezogen auf eine vertikale Ansicht von oben zentral innerhalb des Rings, angeordnet. Somit ist die Abstandsmesseinrichtung vor seitlichen Stößen geschützt, die andernfalls durch Hindernisse hervorgerufen werden könnten, die sich in derselben horizontalen Ebene befinden wie die Abstandsmesseinrichtung. In der besonders bevorzugten Ausgestaltung, bei welcher die Abstandsmesseinrichtung zusätzlich bezogen auf die vertikale Richtung in einer Ebene unterhalb des ringförmigen Gehäuseteils angeordnet ist, ist die Abstandsmesseinrichtung zudem auch vor Stößen in vertikale Richtung geschützt, nämlich vor Stößen die durch Hindernisse hervorgerufen werden, die beispielsweise in der Umgebung herabhängen und zumindest mit einer vertikalen Kraftkomponente auf die Abstandsmesseinrichtung einwirken könnten. Die Ringform kann eine Kreisringform sein, jedoch sind auch andere Ringformen denkbar, beispielsweise ovale, polygonale oder quadratische Ringformen oder andere. Die Ringform bietet dabei insbesondere in Verbindung mit einem auf die Ringform als Schutzkappe aufgelegten Deckelelement vorteilhaften Schutz gegen Stöße von oben. Insbesondere kann vorgesehen sein, dass die beiden Gehäuseteile eine Ausgestaltung wie in der Veröffentlichung DE 10 2013 106 294 A1 beschrieben aufweisen. Dabei ist die Abstandsmesseinrichtung überspannt von einem Kreisringteil, welches sich in einer quer zu einer Drehachse der Abstandsmesseinrichtung ausgerichteten Ebene oberhalb der Abstandsmesseinrichtung erstreckt. Der als Kreisringteil ausgebildete Gehäuseteil ist mittels über den Umfang verteilt angeordneter Füße auf dem Gerätegehäuse abgestützt, wobei ein von der Abstandsmesseinrichtung emittiertes optisches Signal zwischen den Füßen hindurch aus dem Gerätegehäuse bzw. dem Gehäuseteil herausgeführt ist. Gegebenenfalls können für die Strahlführung optische Umlenkelemente, wie beispielsweise Prismen, Spiegel und dergleichen, zur Anwendung kommen. Aufgrund eines verglichen mit der Abstandsmesseinrichtung größeren Durchmessers des kreisringförmigen Gehäuseteils erstrecken sich die Füße in einem Bereich radial außerhalb der Abstandsmesseinrichtung, bevorzugt in einer Detektionsbereichsebene, in welcher optische Signale abgegeben und empfangen werden.

Das Flächenbearbeitungsgerät kann nun Hindernisse detektieren, welche bezogen auf eine Raumrichtung von oben kommend in einen Verfahrweg des Flächenbearbeitungsgerätes hineinragen und bei fortschreitender Fortbewegung des Flächenbearbeitungsgerätes mit zumindest einem oberen Gehäuseteilbereich des Flächenbearbeitungsgerätes kollidieren können, nämlich beispielsweise mit einem stoßempfindlichen Teilbereich des Gerätegehäuses, welcher eine Abstandsmesseinrichtung aufweist. Somit kann das Flächenbearbeitungsgerät seine Verfahrstrategie rechtzeitig anpassen, bevor das Hindernis mit der durch den Gehäuseteilbereich geschützten Abstandsmesseinrichtung kollidiert. Ein vertikaler Kollisionsfall kann beispielsweise eintreten, wenn sich das Flächenbearbeitungsgerät unter Möbelstücken mit niedriger Bodenhöhe festfährt oder verklemmt. Ebenso kann eine Krafteinwirkung auf das Flächenbearbeitungsgerät in vertikaler Richtung durch an einer Wand hängende Heizkörper, überhängende Bereiche einer Sockelleiste, sich ändernde Bodenhöhe der zu bearbeitenden Fläche unter Möbelstücken und dergleichen auftreten. Insgesamt werden somit auch Stöße, die zumindest mit einer Richtungskomponente vertikal auf das Flächenbearbeitungsgerät einwirken, erkannt und zur Anpassung der Verfahrstrategie des Flächenbearbeitungsgerätes verwendet. Dabei schließt die Formulierung, dass der Detektionsbereich vertikal ausgerichtet ist, alle solchen Anordnungen ein, bei welchen der Detektionsbereich zumindest eine Komponente in vertikaler Richtung aufweist. Darunter fällt beispielsweise auch ein Vertikalkontaktsensor, dessen Detektionsbereich in eine diagonale Richtung gerichtet ist und somit sowohl horizontale als auch vertikale Wirkrichtung aufweist. Besonders vorteilhaft weist das Flächenbearbeitungsgerät mehrere Vertikalkontaktsensoren auf, welche an unterschiedlichen Positionen der Kollisionsdetektionseinrichtung bzw. des Gerätegehäuses angeordnet sind. Somit können Kollisionen mit herabhängenden Hindernissen an unterschiedlichen Teilbereichen des Flächenbearbeitungsgerätes detektiert werden. Vorzugsweise ergibt sich eine Überlappung der Detektionsbereiche der Vertikalkontaktsensoren, so dass die Gesamtheit der Detektionsbereiche die Oberseite des Gerätegehäuses möglichst vollständig abdeckt und vor vertikalen Stößen schützt. Dadurch können tote Winkel der Kollisionsdetektionseinrichtung ausgeschlossen werden, welche zu einer Beschädigung der Abstandsmesseinrichtung führen könnten.

Des Weiteren wird vorgeschlagen, dass die Kollisionsdetektionseinrichtung zwei relativ zueinander bewegliche Gehäuseteile aufweist, von welchen ein erster Gehäuseteil infolge einer Kollision mit einem Hindernis relativ zu einem zweiten Gehäuseteil verlagerbar ist. Insbesondere wird vorgeschlagen, dass einer der Gehäuseteile den Vertikalkontaktsensor aufweist und der andere Gehäuseteil eine Betätigungseinrichtung zur Betätigung des Vertikalkontaktsensors aufweist. Einer der beiden Gehäuseteile, nämlich ein nichtbeweglicher Gehäuseteil kann einteilig mit weiteren unbeweglichen Gehäuseteilen des Gerätegehäuses ausgebildet sein, insbesondere mit einer Haube, welche das Chassis des Flächenbearbeitungsgerätes und Komponenten wie beispielsweise einen Motor, ein Gebläse, einen Staubsammelraum und dergleichen umgibt. Insbesondere bietet sich eine einteilige Ausbildung an. Alternativ könnte der nichtbewegliche Gehäuseteil mit den weiteren nichtbeweglichen Gehäuseteilen auch beispielsweise mittels einer Schweißverbindung, Klebeverbindung oder dergleichen verbunden sein. Der demgegenüber bewegliche Gehäuseteil ist vorteilhaft gleitend an dem nichtbeweglichen Gehäuseteil gelagert. Insbesondere kann der bewegliche Gehäuseteil auf dem nichtbeweglichen Gehäuseteil liegen. Vorteilhaft ist die Bewegung des ersten Gehäuseteils relativ zu dem zweiten Gehäuseteil durch eine Führung mit einem Anschlag begrenzt, so dass die beiden Gehäuseteile nicht versehentlich voneinander getrennt werden können. Des Weiteren empfiehlt sich eine federbeaufschlagte Anordnung des beweglichen Gehäuseteils an dem unbeweglichen Gehäuseteil.

Bei einer Kollision des Flächenbearbeitungsgerätes mit einem Hindernis stößt das Hindernis vor den ersten Gehäuseteil, welcher daraufhin relativ zu dem zweiten Gehäuseteil verlagert, insbesondere verschoben, wird. Alternativ könnte der erste Gehäuseteil durch den Aufprall auch relativ zu dem zweiten Gehäuseteil verschwenkt werden. Der erste Gehäuseteil ist dabei so an dem Gerätegehäuse platziert und ausgebildet, dass dieser bevorzugt in eine vertikale Richtung über weitere Gehäuseteile des Gerätegehäuses hinaussteht, so dass ein Hindernis, welches über dem Flächenbearbeitungsgerät angeordnet ist, mit dem ersten Gehäuseteil in Kontakt tritt, bevor andere Gehäuseteile des Gerätegehäuses oder stoßempfindliche weitere Messeinrichtungen des Flächenbearbeitungsgerätes mit dem Hindernis in Kontakt treten können und dabei im schlimmsten Fall beschädigt werden. Bei der Kollision mit dem Hindernis wird der erste Gehäuseteil in vertikaler Richtung auf den zweiten Gehäuseteil zubewegt, wodurch die Betätigungseinrichtung mit einem korrespondierenden Vertikalkontaktsensor in mittelbare oder unmittelbare Wirkverbindung tritt, insbesondere in Kontakt tritt, und eine Signalausgabe über die Kollision veranlasst wird. Die Betätigungseinrichtung kann in einem besonders einfachen Fall ein Wandungsteilbereich des ersten oder zweiten Gehäuseteils sein. Sofern beispielsweise der erste Gehäuseteil der bewegliche Gehäuseteil ist, kann dessen Unterseite eine Betätigungseinrichtung darstellen, welche auf einen, beispielsweise auf der Oberseite des zweiten Gehäuseteils angeordneten, Vertikalkontaktsensor einwirkt, insbesondere auf diesen drückt. In einer Neutralstellung des ersten und zweiten Gehäuseteils zueinander, d. h. bei Abwesenheit eines Hindernisses an dem ersten Gehäuseteil, sind die Betätigungseinrichtung und der Vertikalkontaktsensor vorteilhaft zueinander beabstandet bzw. zumindest so zueinander angeordnet, dass die Betätigungseinrichtung keine Kraft auf den Vertikalkontaktsensor ausübt, welche zu einer Signalauslösung führen könnte.

Über einem bezogen auf die vertikale Richtung unteren zweiten Gehäuseteil ist vorzugsweise ein oberer erster Gehäuseteil angeordnet, welcher im Wesentlichen ebenfalls ringförmig ausgebildet ist und entweder eine Betätigungseinrichtung für einen Vertikalkontaktsensor des zweiten Gehäuseteils bereitstellt oder einen Vertikalkontaktsensor für eine Betätigungseinrichtung des zweiten Gehäuseteils bereitstellt. Vorzugsweise weisen die beiden Gehäuseteile im Wesentlichen gleiche Außendurchmesser auf, wobei vorteilhaft jedoch der verlagerbare Gehäuseteil etwas über den unbeweglich mit dem Gerätegehäuse verbundenen Gehäuseteil hinausragt - bezogen auf eine horizontale Ebene -, so dass ebenfalls auch horizontale Stöße von diesem abgefangen werden können. Insbesondere empfiehlt sich eine federbeaufschlagte Anordnung des beweglichen Gehäuseteils.

Des Weiteren wird vorgeschlagen, dass die Betätigungseinrichtung einen Taster, eine Anlagefläche und/oder einen Anschlag aufweist. Der Betätigungseinrichtung kann dabei insbesondere vorteilhaft ein Federelement zugeordnet sein, welches einen Schalthub der Betätigungseinrichtung vergrößert und somit die Empfindlichkeit der Kollisionsdetektionseinrichtung bei der Detektion einer Kollision mit einem Hindernis beeinflusst. Der Taster, die Anlagefläche und/ oder der Anschlag sind dabei vorteilhaft an einem Teilbereich des ersten bzw. zweiten Gehäuseteils angeordnet, welcher dem an dem zweiten bzw. ersten Gehäuseteil angeordneten Vertikalkontaktsensor gegenüberliegt. Die Betätigungseinrichtung wirkt entweder direkt oder alternativ indirekt, bspw. unter Zwischenschaltung eines Federelementes, auf den Vertikalkontaktsensor ein und erzeugt bei Kraftübertragung ein entsprechendes Schaltsignal, welches die Kollision mit einem Hindernis anzeigt. Gleiches kann durch eine Anlagefläche der Betätigungseinrichtung geschehen, welche beispielsweise eine Unterseite eines ersten, oberen Gehäuseteils darstellt, wobei der korrespondierende untere Gehäuseteil einen hervorstehenden Vertikalkontaktsensor oder ein hervorstehendes Federelement aufweist, so dass eine Kraft von der Anlagefläche auf den Vertikalkontaktsensor ausgeübt werden kann. Alternativ kann die Betätigungseinrichtung auch einen Anschlag aufweisen, welcher beispielsweise formkorrespondierend zu einem Vertikalkontaktsensor ausgebildet ist und durch eine relative Verlagerung der beiden Gehäuseteile zueinander eine Kraft auf die Betätigungseinrichtung ausübt. Besonders vorteilhaft kann der Anschlag des einen Gehäuseteils dabei in eine Aussparung des anderen Gehäuseteils eingreifen, welche Aussparung den Anschlag derart positioniert hält, dass eine Kraftbeaufschlagung dem Vertikalkontaktsensor zugeführt ist.

Des Weiteren kann beispielsweise aber auch ein Taster vertikal beweglich an dem ebenfalls einen Vertikalkontaktsensor aufweisenden Gehäuseteil angeordnet sein. Dabei wird der Taster bei einer Kollision des Flächenbearbeitungsgerätes mit einem Hindernis von einem korrespondierenden Teilbereich des anderen Gehäuseteils niedergedrückt, so dass eine entsprechende Kraft auf den Vertikalkontaktsensor ausgeübt wird. Gemäß dieser Ausführung weist somit ein und derselbe Gehäuseteil sowohl eine Betätigungseinrichtung als auch einen Vertikalkontaktsensor auf, wobei gleichzeitig jedoch auch der andere Gehäuseteil einen Teil der Betätigungseinrichtung bildet.

Des Weiteren wird vorgeschlagen, dass der erste Gehäuseteil die Betätigungseinrichtung aufweist, und dass der zweite Gehäuseteil den Vertikalkontaktsensor aufweist, wobei der erste Gehäuseteil bezogen auf eine übliche Orientierung des Flächenbearbeitungsgerätes während einer Fortbewegung über dem zweiten Gehäuseteil angeordnet ist. Somit liegt bevorzugt der erste Gehäuseteil auf dem zweiten Gehäuseteil auf. Des Weiteren kann dementsprechend bezogen auf die vertikale Richtung auch die Betätigungseinrichtung über dem Vertikalkontaktsensor angeordnet sein. Dies ist insbesondere vorteilhaft, da dadurch die Gewichtskraft des ersten Gehäuseteils bzw. der Betätigungseinrichtung in Richtung des Vertikalkontaktsensors gerichtet ist, so dass es bei einer Betätigung der Betätigungseinrichtung besonders einfach zu einem Ansprechen des Vertikalkontaktsensors kommt. Grundsätzlich kann es jedoch auch vorgesehen sein, dass der Vertikalkontaktsensor bezogen auf die vertikale Richtung über der Betätigungseinrichtung angeordnet ist, so dass der Vertikalkontaktsensor entgegen der Gewichtskraft auf die Betätigungseinrichtung zubewegt wird.

Bevorzugt wird vorgeschlagen, dass der Vertikalkontaktsensor bezogen auf eine übliche Orientierung des Flächenbearbeitungsgerätes während einer Fortbewegung in Vorwärtsrichtung vorne an dem Gehäuseteil angeordnet ist. Somit kann der Vertikalkontaktsensor bei einer üblichen Vorwärtsfahrt des Flächenbearbeitungsgerätes bereits eine Kollision mit einem Hindernis detektieren, bevor die Abstandsmesseinrichtung in den Bereich des Hindernisses gelangt. Somit kann eine Verfahrstrategie des Flächenbearbeitungsgerätes frühzeitig abgeändert werden, bevor eine Beschädigung an der Abstandsmesseinrichtung stattfindet. Besonders vorteilhaft kann vorgesehen sein, dass die Kollisionsdetektionseinrichtung eine Mehrzahl von Vertikalkontaktsensoren aufweist, welche bezogen auf eine vertikale Blickrichtung um die Abstandsmesseinrichtung herum verteilt sind, so dass die Abstandsmesseinrichtung unabhängig von einer Fortbewegungsrichtung des Flächenbearbeitungsgerätes geschützt ist, d. h. auch bei einer Rückwärtsfahrt oder Kurvenfahrt. Bei der Verwendung einer Mehrzahl von Vertikalkontaktsensoren sind benachbarte Vertikalkontaktsensoren vorteilhaft so angeordnet, dass sich deren Detektionsbereiche überlappen, so dass das Entstehen von toten Winkeln verhindert ist. Vorteilhaft deckt ein gesamter Detektionsbereich der Vertikalkontaktsensoren dabei einen Winkelbereich von zumindest 180° um die Abstandsmesseinrichtung herum ab. Insbesondere kann vorgesehen sein, dass der Detektionsbereich der Vertikalkontaktsensoren einen Winkelbereich bis hin zu 360° abdeckt.

Des Weiteren wird vorgeschlagen, dass die Kollisionsdetektionseinrichtung mindestens einen Horizontalkontaktsensor aufweist, welcher so an dem Gerätegehäuse angeordnet ist, dass dessen Detektionsbereich bei einer üblichen Orientierung des Flächenbearbeitungsgerätes während einer Fortbewegung parallel zu einer Fortbewegungsrichtung ausgerichtet ist, so dass der Horizontalkontaktsensor zur Detektion einer horizontal auf das Flächenbearbeitungsgerät wirkenden Kraft ausgebildet ist. Durch diese Ausgestaltung, bei welcher die Kollisionsdetektionseinrichtung sowohl zumindest einen Vertikalkontaktsensor als auch zumindest einen Horizontalkontaktsensor aufweist, kann auf Hindernisse reagiert werden, welche eine horizontale Krafteinwirkung, eine vertikale Krafteinwirkung oder auch eine sowohl horizontale als auch vertikale Krafteinwirkung auf die Kollisionsdetektionseinrichtung ausüben. Somit weist die Kollisionsdetektionseinrichtung eine 3D-Empfindlichkeit gegenüber Hindernissen auf, so dass Kollisionen mit Hindernissen nicht nur in horizontaler Richtung, sondern auch in vertikaler Richtung detektiert werden können und entsprechend zu einer Anpassung der Verfahrstrategie des Flächenbearbeitungsgerätes führen können. Darüber hinaus können die empfangenen Signale der Kollisionsdetektionseinrichtung auch dahingehend ausgewertet werden, wo sich das betreffende Hindernis innerhalb eines Raumes befindet. Sofern beispielsweise gleichzeitig ein Vertikalkontaktsensor auf der rechten Frontseite des Flächenbearbeitungsgerätes und ein Horizontalkontaktsensor auf der rechten Frontseite des Flächenbearbeitungsgerätes auf einen Stoß reagieren, kann davon ausgegangen werden, dass es sich um ein Hindernis handelt, welches das Flächenbearbeitungsgerät vorne rechts sowohl in horizontaler Richtung als auch in vertikaler Richtung trifft. Dies kann beispielsweise eine geneigte Sockelleiste sein, auf welche das Flächenbearbeitungsgerät zufährt, oder ein durchhängender Matratzenteil unter einem Bett oder dergleichen. Das Flächenbearbeitungsgerät weist dabei vorteilhaft eine Steuer- und Auswerteeinrichtung auf, welche mit der Kollisionsdetektionseinrichtung in Verbindung steht und die Signale der Vertikalkontaktsensoren und Horizontalkontaktsensoren mit Und/Oder-Verknüpfungen in Beziehung setzen kann, um ein Verhaltensmuster des Flächenbearbeitungsgerätes nach Bedarf zu variieren.

Besonders bevorzugt wird eine Ausführungsform vorgeschlagen, welche mindestens zwei Vertikalkontaktsensoren und mindestens zwei Horizontalkontaktsensoren aufweist, welche ringförmig so an dem Gerätegehäuse angeordnet sind, dass diese die Abstandsmesseinrichtung in eine vertikale Richtung betrachtet umgeben. Beispielsweise kann vorgesehen sein, dass ein bezogen auf eine übliche Fortbewegungsrichtung des Flächenbearbeitungsgerätes frontaler Bereich des Gerätegehäuses zwei Vertikalkontaktsensoren aufweist, die vertikale Stöße in einem Winkelbereich von ca. 180° um die Abstandsmesseinrichtung herum detektieren, während zwei oder mehr Horizontalkontaktsensoren in einem demgegenüber hinteren Bereich des Gerätegehäuses angeordnet sind und horizontale Stöße, beispielsweise durch frontal auf das Gerätegehäuse einwirkende Hindernisse, detektieren. Die Anzahl und Position der einzelnen Kontaktsensoren kann dabei stets in Abstimmung mit einer Software zur Beeinflussung der Verhaltensstrategie des Flächenbearbeitungsgerätes abgestimmt werden, um unterschiedliche Verhaltensmuster des Flächenbearbeitungsgerätes auszulösen.

Des Weiteren wird vorgeschlagen, dass der Kontaktsensor einen elektronischen Schalter, einen induktiven oder kapazitiven Weggeber, ein Piezoelement, einen Dehnungsmessstreifen, einen leitfähigen Schaum und/oder eine Lichtschranke aufweist. Die durch eine Kollision mit einem Hindernis hervorgerufene Krafteinwirkung auf die Kollisionsdetektionseinrichtung, insbesondere eine dadurch hervorgerufene Verlagerung der Gehäuseteile zueinander, kann somit auf unterschiedliche Art und Weise gemessen werden. Insbesondere kann eine Kollision direkt oder indirekt über druck- bzw. kraftempfindliche Sensoren, wie z. B. Piezoelemente oder Dehnungsmessstreifen, erfasst werden. Darüber hinaus können auch alternative Messverfahren mit Weggebern, Lichtschranken, Leitfähigkeitsmessungen und dergleichen zum Einsatz kommen.

Schließlich wird vorgeschlagen, dass zwischen der Betätigungseinrichtung und dem Kontaktsensor ein Federelement angeordnet ist, so dass die Betätigungseinrichtung über das Federelement auf den Kontaktsensor einwirken kann. Durch diese Ausgestaltung kann der Schalthub vergrößert werden, so dass der Kontaktsensor erst dann eine Kollision mit einem Hindernis detektiert, wenn ein bestimmter Schwellwert der einwirkenden Kraft überschritten wurde.

### Kurze Beschreibung der Zeichnungen

Im Folgenden wird die Erfindung anhand von Ausführungsbeispielen näher erläutert. Es zeigen:
- Fig. 1: ein Flächenbearbeitungsgerät mit einer Kollisionsdetektionsein-richtung,
- Fig. 2: eine Kollisionsdetektionseinrichtung in perspektivischer Explo-sionsdarstellung,
- Fig. 3: einen unteren Gehäuseteil der Kollisionsdetektionseinrichtung in einer perspektivischen Ansicht,
- Fig. 4: einen Querschnitt des Gehäuseteils gemäß Figur 3,
- Fig. 5: einen Längsschnitt durch einen Vertikalkontaktsensor der Kollisionsdetektionseinrichtung,
- Fig. 6: einen Längsschnitt gemäß der Linie VI - VI in Figur 3.

### Beschreibung der Ausführungsformen

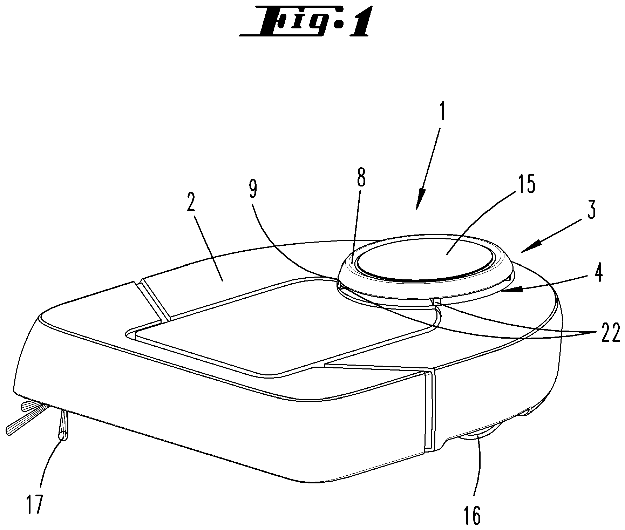

Figur 1 zeigt ein Flächenbearbeitungsgerät 1, welches hier als sich selbsttätig fortbewegender Saugroboter ausgebildet ist. Das Flächenbearbeitungsgerät 1 weist ein Gerätegehäuse 2 auf, an welchem unterseitig, einer zu reinigenden Fläche zugewandt, elektromotorisch angetriebene Räder 16 sowie eine über die Unterkante eines Gehäusebodens hinausragende, gleichfalls elektromotorisch angetriebene Bürste 17 angeordnet sind. Weiter weist das Flächenbearbeitungsgerät 1 im Bereich der Bürste 17 eine nicht weiter dargestellte Saugmundöffnung auf, über welche mittels einer Motor-Gebläse-Einheit mit Sauggut beaufschlagte Luft in das Flächenbearbeitungsgerät 1 eingesaugt werden kann. Für die Elektroversorgung der einzelnen Elektrokomponenten des Flächenbearbeitungsgerätes 1, beispielsweise für den Antrieb der Räder 16 und der Bürste 17 und darüber hinaus weiter vorgesehener Elektronik, weist das Flächenbearbeitungsgerät 1 einen nicht dargestellten, wieder aufladbaren Ackumulator auf.

Das Flächenbearbeitungsgerät 1 weist eine Abstandsmesseinrichtung 3 auf, welche zur Detektion von Hindernissen innerhalb einer Umgebung des Flächenbearbeitungsgerätes 1 ausgebildet ist. Die Abstandsmesseinrichtung 3 verfügt über einen Detektionsbereich, innerhalb welchem vorhandene Hindernisse detektiert werden können. Die Abstandsmesseinrichtung 3 ist hier beispielsweise eine Triangulationsmesseinrichtung, welche Abstände zu Hindernissen innerhalb der Umgebung des Flächenbearbeitungsgerätes 1 messen kann. Ein Sensor dieser Abstandsmesseinrichtung 3 weist im Einzelnen eine Laserdiode auf, deren emittierter Lichtstrahl über eine Umlenkeinrichtung aus dem Gerätegehäuse 2 des Flächenbearbeitungsgerätes 1 herausgeführt und um eine in der gezeigten Orientierung des Flächenbearbeitungsgerätes 1 senkrechte Drehachse rotierbar ist, so dass ein um 360° rotierender Detektionsbereich entsteht. Dadurch ist eine Rundum-Abstandsmessung um das Flächenbearbeitungsgerät 1 herum möglich. Mit Hilfe dieser Abstandsmesseinrichtung 3 kann die Umgebung des Flächenbearbeitungsgerätes 1 in einer bevorzugt horizontalen Ebene vermessen werden, d. h. in einer zu der zu reinigenden Fläche parallelen Ebene. Dadurch kann das Flächenbearbeitungsgerät 1 unter Vermeidung einer horizontalen Kollision mit Hindernissen bewegt werden. Die mittels der Abstandsmesseinrichtung 3 aufgenommenen Messdaten, welche Abstände zu Hindernissen und/oder Wänden in der Umgebung darstellen, werden zur Erstellung einer Karte der Umgebung genutzt. Ergänzend können zur Erstellung der Umgebungskarte beispielsweise auch Odometriedaten der Räder 16 genutzt werden, welche zum Vergleich der mittels der Triangulationsmesseinrichtung gemessenen Daten dienen. Die als Triangulationsmesseinrichtung ausgebildete Abstandsmesseinrichtung 3 erfüllt hier somit zwei Aufgaben gleichzeitig, nämlich zum einen das Abscannen der Umgebung des Flächenbearbeitungsgerätes 1 zum Aufbau einer Umgebungskarte, und zum anderen die Detektion von Hindernissen im Sinne einer Kollisionsvermeidung.

Das Flächenbearbeitungsgerät 1 verfügt des Weiteren über eine Kollisionsdetektionseinrichtung 4, welche hier mehrere berührungssensitive Kontaktsensoren 5 aufweist (in Figur 1 nicht dargestellt). Die Kollisionsdetektionseinrichtung 4 ist oberseitig des Gerätegehäuses 2 zu der Abstandsmesseinrichtung 3 benachbart angeordnet und besteht aus einem ringförmigen ersten Gehäuseteil 8 und einem ringförmigen zweiten Gehäuseteil 9. Der erste Gehäuseteil 8 liegt bezogen auf eine vertikale Richtung über dem zweiten Gehäuseteil 9 und ist zudem mit einem Deckelelement 15 bedeckt. Unterhalb des Deckelelementes 15 und zentral innerhalb bzw. unterhalb der Gehäuseteile 8, 9 ist die Abstandsmesseinrichtung 3 angeordnet, bzw. zumindest stoßempfindliche Komponente der Abstandsmesseinrichtung 3 wie zum Beispiel ein Sensor, eine optische Umlenkeinrichtung und dergleichen.

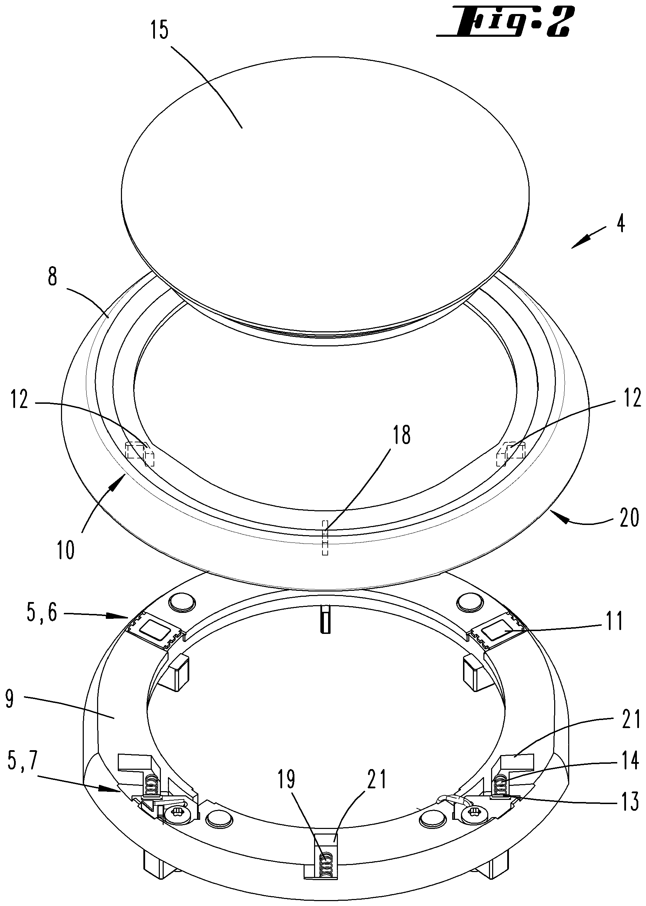

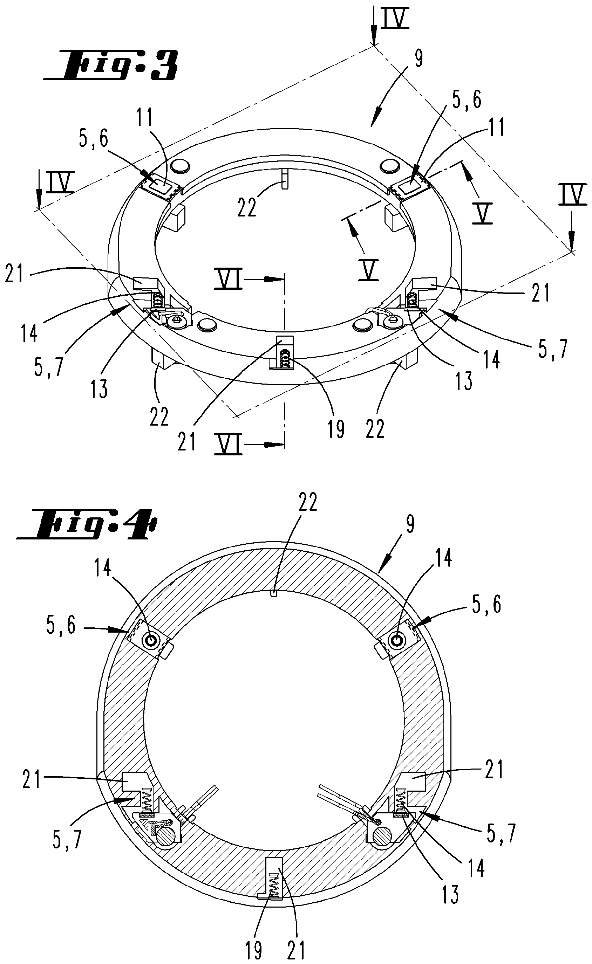

Figur 2 zeigt die beiden Gehäuseteile 8, 9 und das Deckelelement 15. Der untere, zweite Gehäuseteil 9 ist in vergrößerter Darstellung ebenfalls in Figur 3 gezeigt. Dargestellt ist eine Orientierung der Gehäuseteile 8, 9, bei welcher eine bei einer Vorwärtsbewegung des Flächenbearbeitungsgerätes 1 vorauseilende Front des Flächenbearbeitungsgerätes 1 in der Blattebene vom Betrachter weg zeigt.

Im Einzelnen weist der zweite Gehäuseteil 9 eine Kollisionsdetektionseinrichtung 4 mit insgesamt vier Kontaktsensoren 5 auf, nämlich zwei Vertikalkontaktsensoren 6 und zwei Horizontalkontaktsensoren 7. Die beiden Vertikalkontaktsensoren 6 sind dabei bezogen auf eine übliche Vorwärtsbewegung des Flächenbearbeitungsgerätes 1 an der Frontseite des zweiten Gehäuseteils 9 angeordnet. Die beiden Horizontalkontaktsensoren 7 sind demgegenüber an einem zurückliegenden Teilbereich des zweiten Gehäuseteils 9 angeordnet. Durch diese Ausgestaltung sind die Vertikalkontaktsensoren 6 somit in einem vorauseilenden Teilbereich der Kollisionsdetektionseinrichtung 4 angeordnet, welcher bei einer üblichen Vorwärtsbewegung des Flächenbearbeitungsgerätes 1 zuerst mit einem Hindernis in Kontakt treten würde.

Die Vertikalkontaktsensoren 6 weisen hier jeweils einen Taster 11 auf, welcher über eine in Richtung des ersten Gehäuseteils 8 weisende Oberflächenebene des zweiten Gehäuseteils 9, d. h. in vertikale Richtung, hervorsteht und relativ zu dem zweiten Gehäuseteil 9 beweglich ist. Beispielsweise kann der Taster 11 aus einem verformbaren Material hergestellt sein, beispielsweise einem Elastomer, welches sich bei vertikaler Kraftbeaufschlagung verformt und nach unten, d. h. auf den zweiten Gehäuseteil 9 zu, bewegt. Unter dem Taster 11 ist ein Federelement 14 (in Figur 3 nicht dargestellt) angeordnet, welches wiederum in Wirkverbindung mit einem Schalter 13 (ebenfalls in Figur 3 nicht dargestellt) steht. Die beiden Vertikalkontaktsensoren 6 sind in einem solchen Abstand an dem zweiten Gehäuseteil 9 angeordnet, dass diese im Wesentlichen einen Detektionsbereich von ungefähr 180° der Ringform der Gehäuseteile 8, 9 abdecken, nämlich den bezogen auf die Fortbewegungsrichtung des Flächenbearbeitungsgerätes 1 in Vorwärtsrichtung frontal angeordneten Bereich.

Die beiden Horizontalkontaktsensoren 7 sind demgegenüber in einem Teilbereich des zweiten Gehäuseteils 9 angeordnet, welcher bezogen auf eine übliche Vorwärtsbewegung des Flächenbearbeitungsgerätes 1 auf der rückwärtigen Seite des zweiten Gehäuseteils 9 angeordnet ist. Die Horizontalkontaktsensoren 7 weisen jeweils einen in eine Aussparung 21 des zweiten Gehäuseteils 9 eingebetteten elektronischen Schalter 13 sowie ein Federelement 14 auf, welches in Wirkverbindung mit dem Schalter 13 steht. Dem Horizontalkontaktsensor 7 ist ein korrespondierender Anschlag 12 zugeordnet, welcher an dem ersten Gehäuseteil 8 ausgebildet ist (siehe Figur 2) und formkorrespondierend in die Aussparung 21 eingreift (bei zusammengebautem Zustand der beiden Gehäuseteile 8, 9). Der Anschlag 12 steht über das Federelement 14 mit dem Schalter 13 in Wirkverbindung. Der Anschlag 12 stellt eine Betätigungseinrichtung 10 für den Schalter 13 dar und wirkt bei einer horizontalen Bewegung des ersten Gehäuseteils 8 gegen den Schalter 13.

Der zweite Gehäuseteil 9 weist des Weiteren eine zusätzliche Aussparung 21 auf, welche zwischen den beiden Horizontalkontaktsensoren 7 ausgebildet ist. Innerhalb der Aussparung 21 ist ein Federelement 19 angeordnet. Im montierten Zustand von erstem Gehäuseteil 8 und zweitem Gehäuseteil 9 greift ein korrespondierendes Anlageelement 18 des ersten Gehäuseteils 8 in die Aussparung 21 ein, nämlich neben das Federelement 19. Die Aussparung 21 und das Anlageelement 18 dienen zusammen als Führung für die Bewegung des ersten Gehäuseteils 8 relativ zu dem zweiten Gehäuseteil 9. Dabei ist die Bewegung durch das Federelement 19 gedämpft.

Figur 2 verdeutlicht das Zusammenspiel zwischen dem ersten Gehäuseteil 8 und dem zweiten Gehäuseteil 9 insbesondere in Bezug auf das an dem ersten Gehäuseteil 8 ausgebildete Anlageelement 18, welches zum Eingriff in die korrespondierende Aussparung 21 des zweiten Gehäuseteils 9 bestimmt ist, und den Anschlag 12 des ersten Gehäuseteils 8, welcher zum formkorrespondierenden Eingriff in die Aussparung 21 des zweiten Gehäuseteils 9 bestimmt ist. Zur Interaktion mit den Tastern 11 der beiden Vertikalkontaktsensoren 6 weist der erste Gehäuseteil 8 eine unterseitig ausgebildete Anlagefläche 20 auf, welche im montierten Zustand der beiden Gehäuseteile 8, 9 gleitend auf dem zweiten Gehäuseteil 9 und insbesondere auf den Tastern 11 gelagert ist. Die Gleitbewegung ist dabei mittels des Anlageelementes 18 und der korrespondierenden Aussparung 21 geführt.

Figur 4 zeigt einen Querschnitt des zweiten Gehäuseteils 9 gemäß der Linie IV - IV der Figur 3. Erkennbar ist hier zusätzlich zu den Figuren 2 und 3 das Federelement 14 des Vertikalkontaktsensors 6, welches aufgrund einer Betätigung des Tasters 11 in vertikale Richtung kontrahiert werden kann.

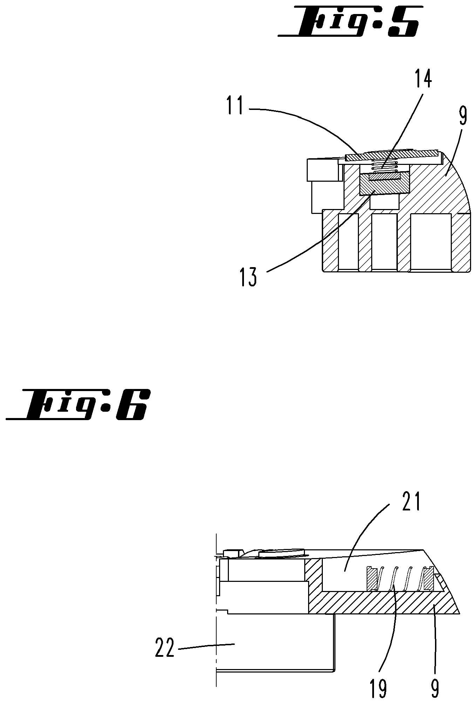

Figur 5 zeigt einen Querschnitt durch einen Teilbereich des zweiten Gehäuseteils 9 gemäß der Linie V - V in Figur 3. Der Querschnitt ist durch einen Vertikalkontaktsensor 6 geführt und zeigt den Taster 11, welcher über die Oberflächenebene des Gehäuseteils 9 hervorsteht. Unter dem Taster 11 befindet sich das Federelement 14, welches durch eine Betätigung des Tasters 11 nach unten kontrahiert werden kann und unter Verlängerung des Schalthubes auf den unterhalb des Federelementes 14 angeordneten elektronischen Schalter 13 einwirkt, der daraufhin ein Signal ausgibt, welches mit einer vertikalen Kollision eines Hindernisses assoziiert ist.

Figur 6 zeigt schließlich einen Querschnitt durch einen weiteren Teilbereich des zweiten Gehäuseteils 9 gemäß der Linie VI - VI in Figur 3. Der Querschnitt ist durch die Aussparung 21 mit dem darin angeordneten Federelement 19 geführt. Zu erkennen ist der neben dem Federelement 19 verbleibende Teilbereich der Aussparung 21, welcher zum Eingriff durch das Anlageelement 18 des ersten Gehäuseteils 8 dient.

Im Folgenden wird die Erfindung anhand einer Kollision des Flächenbearbeitungsgerätes 1 mit einem Hindernis dargestellt, welches eine Aufprallkraft auf die Kollisionsdetektionseinrichtung 4 sowohl in horizontaler als auch in vertikaler Richtung ausübt. Ein solches Hindernis kann beispielsweise ein an einer Wand hängendes bodennahes Hindernis sein, welches den ersten Gehäuseteil 8 der Kollisionsdetektionseinrichtung 4 oberhalb der Detektionsebene der Abstandsmesseinrichtung 3 berührt. Ein solches Hindernis kann beispielsweise ein herabhängender Teil einer Unterseite eines Sofas sein, welcher sich außerhalb der Detektionsebene der Abstandsmesseinrichtung 3 befindet und so tief herabhängt, dass der erste Gehäuseteil 8 und gegebenenfalls das Deckelelement 15 mit diesem kollidiert.

Bei einer Kollision in Vorwärtsrichtung des Flächenbearbeitungsgerätes 1 stößt das Hindernis beispielsweise an einem Bereich des ersten Gehäuseteils 8 an, welcher sich zwischen den beiden Vertikalkontaktsensoren 6 befindet. Da der erste Gehäuseteil 8 schiebebeweglich auf dem zweiten Gehäuseteil 9 gelagert ist, wird der erste Gehäuseteil 8 relativ zu dem zweiten Gehäuseteil 9 verlagert, nämlich entlang der Führung der Aussparung 21 des zweiten Gehäuseteils 9 und des korrespondierenden Anlageelementes 18 des ersten Gehäuseteils 8. Gleichzeitig wird der erste Gehäuseteil 8 aufgrund der vertikal wirkenden Kraftkomponente des Stoßes in Richtung des zweiten Gehäuseteils 9 nach unten gedrückt, so dass die Anlagefläche 20 des ersten Gehäuseteils 8 auf die Taster 11 der Vertikalkontaktsensoren 6 drückt. Durch die Verlagerung des ersten Gehäuseteils 8 relativ zu dem zweiten Gehäuseteil 9 wird ein Kollisionssignal an den elektronischen Schaltern 13 der Kontaktsensoren 5, nämlich sowohl an den Vertikalkontaktsensoren 6 als auch an den Horizontalkontaktsensoren 7, ausgelöst. Das Kollisionssignal wird von einer Auswerte- und Steuereinrichtung des Flächenbearbeitungsgerätes 1 dahingehend weiterverarbeitet, dass ermittelt wird, welche Kontaktsensoren 5 eine Kollision festgestellt haben und in welcher Position sich das Hindernis relativ zu dem Flächenbearbeitungsgerät 1 befindet. In dem beispielhaften Fall schließt die Auswerte- und Steuereinrichtung hier darauf, dass sich das Hindernis in Fahrtrichtung vor und über dem Flächenbearbeitungsgerät 1 befindet. Daraufhin wird ein Verhaltensmuster berechnet, welches geeignet ist, das Flächenbearbeitungsgerät 1 an dem Hindernis vorbeizuführen. Hierzu wird anschließend ein entsprechender Steuerbefehl geniert, welcher die Räder 16 des Flächenbearbeitungsgerätes 1 so antreibt, dass das Flächenbearbeitungsgerät 1 eine Fahrbewegung ausführt, die um das Hindernis herumführt.

Sofern gemäß einer Ausführung beispielsweise nur einer der Vertikalkontaktsensoren 6 einen Stoß detektiert, kann entsprechend darauf geschlossen werden, dass das Hindernis auf derjenigen Seite des Flächenbearbeitungsgerätes 1 vorhanden ist, auf welcher sich der auslösende Vertikalkontaktsensor 6 befindet. Dementsprechend können Und/Oder-Verknüpfungen zwischen den Kollisionssignalen der Kontaktsensoren 5 in der Software vorprogrammiert sein, welche bei bestimmten Ereignisparametern auf eine bestimmte Position des kollidierenden Hindernisses schließen lassen.

### Liste der Bezugszeichen

- 1: Flächenbearbeitungsgerät
- 2: Gerätegehäuse
- 3: Abstandsmesseinrichtung
- 4: Kollisionsdetektionseinrichtung
- 5: Kontaktsensor
- 6: Vertikalkontaktsensor
- 7: Horizontalkontaktsensor
- 8: Erster Gehäuseteil
- 9: Zweiter Gehäuseteil
- 10: Betätigungseinrichtung
- 11: Taster
- 12: Anschlag
- 13: Schalter
- 14: Federelement
- 15: Deckelelement
- 16: Rad
- 17: Bürste
- 18: Anlageelement
- 19: Federelement
- 20: Anlagefläche
- 21: Aussparung
- 22: Fuß

## Patentansprüche

1. Sich selbsttätig fortbewegendes Flächenbearbeitungsgerät (1), insbesondere Reinigungsroboter, mit einem Gerätegehäuse (2) und einer Kollisionsdetektionseinrichtung (4) zur Detektion einer Kollision des Flächenbearbeitungsgerätes (1) mit einem Hindernis, wobei die Kollisionsdetektionseinrichtung (4) mindestens einen berührungssensitiven Kontaktsensor (5) aufweist, wobei der berührungssensitive Kontaktsensor (5) ein Vertikalkontaktsensor (6) ist, welcher so an dem Gerätegehäuse (2) angeordnet ist, dass dessen Detektionsbereich bei einer üblichen Orientierung des Flächenbearbeitungsgerätes (1) während einer Fortbewegung vertikal ausgerichtet ist, so dass der Vertikalkontaktsensor (6) zur Detektion einer vertikal auf das Flächenbearbeitungsgerät (1) wirkenden Kraft ausgebildet ist, **dadurch gekennzeichnet, dass** die Kollisionsdetektionseinrichtung (4) zwei relativ zueinander bewegliche Gehäuseteile (8, 9) aufweist, von welchen zumindest einer sich ringförmig innerhalb einer horizontalen Ebene erstreckend ausgebildet ist, wobei eine zur Messung von Abständen zu Hindernissen ausgebildete Abstandsmesseinrichtung (3) in eine vertikale Richtung betrachtet innerhalb der Ringform angeordnet ist.

2. Flächenbearbeitungsgerät (1) nach Anspruch 1, **dadurch gekennzeichnet, dass** die Kollisionsdetektionseinrichtung (4) zwei relativ zueinander bewegliche Gehäuseteile (8, 9) aufweist, von welchen ein erster Gehäuseteil (8) infolge einer Kollision mit einem Hindernis relativ zu einem zweiten Gehäuseteil (9) verlagerbar ist, wobei insbesondere einer der Gehäuseteile (8, 9) den Vertikalkontaktsensor (6) aufweist und der andere Gehäuseteil (9, 8) eine Betätigungseinrichtung (10) zur Betätigung des Vertikalkontaktsensors (6) aufweist.

3. Flächenbearbeitungsgerät (1) nach Anspruch 1 oder 2, **dadurch gekennzeichnet, dass** die Abstandsmesseinrichtung (3) bezogen auf die vertikale Richtung unterhalb des ringförmigen Gehäuseteils (8, 9) angeordnet ist..

4. Flächenbearbeitungsgerät (1) nach Anspruch 2 oder 3, **dadurch gekennzeichnet, dass** die Betätigungseinrichtung (10) einen Taster (11), eine Anlagefläche (20) und/oder einen Anschlag (12) aufweist.

5. Flächenbearbeitungsgerät (1) nach einem der Ansprüche 2 bis 4, **dadurch gekennzeichnet, dass** der erste Gehäuseteil (8) die Betätigungseinrichtung (10) aufweist, und dass der zweite Gehäuseteil (9) den Vertikalkontaktsensor (6) aufweist, wobei der erste Gehäuseteil (8) bezogen auf eine übliche Orientierung des Flächenbearbeitungsgerätes (1) während einer Fortbewegung über dem zweiten Gehäuseteil (9) angeordnet ist.

6. Flächenbearbeitungsgerät (1) nach einem der vorhergehenden Ansprüche, **dadurch gekennzeichnet, dass** der Vertikalkontaktsensor (6) bezogen auf eine übliche Orientierung des Flächenbearbeitungsgerätes (1) während einer Fortbewegung in Vorwärtsrichtung vorne an dem Gehäuseteil (8, 9) angeordnet ist.

7. Flächenbearbeitungsgerät (1) nach einem der vorhergehenden Ansprüche, **dadurch gekennzeichnet, dass** die Kollisionsdetektionseinrichtung (4) mindestens einen Horizontalkontaktsensor (7) aufweist, welcher so an dem Gerätegehäuse (2) angeordnet ist, dass dessen Detektionsbereich bei einer üblichen Orientierung des Flächenbearbeitungsgerätes (1) während einer Fortbewegung parallel zu einer Fortbewegungsrichtung ausgerichtet ist, so dass der Horizontalkontaktsensor (7) zur Detektion einer horizontal auf das Flächenbearbeitungsgerät (1) wirkenden Kraft ausgebildet ist.

8. Flächenbearbeitungsgerät (1) nach Anspruch 7, **gekennzeichnet durch** mindestens zwei Vertikalkontaktsensoren (6) und mindestens zwei Horizontalkontaktsensoren (7), welche ringförmig so an dem Gerätegehäuse (2) angeordnet sind, dass diese die Abstandsmesseinrichtung (3) in eine vertikale Richtung betrachtet umgeben.

9. Flächenbearbeitungsgerät (1) nach einem der vorhergehenden Ansprüche, **dadurch gekennzeichnet, dass** der Kontaktsensor (5) einen elektronischen Schalter (13), einen induktiven oder kapazitiven Weggeber, ein Piezoelement, einen Dehnungsmessstreifen, einen leitfähigen Schaum und/oder eine Lichtschranke aufweist.

10. Flächenbearbeitungsgerät (1) nach einem der Ansprüche 2 bis 9, **dadurch gekennzeichnet, dass** zwischen der Betätigungseinrichtung (10) und dem Kontaktsensor (5) ein Federelement (14) angeordnet ist, so dass die Betätigungseinrichtung (10) über das Federelement (14) auf den Kontaktsensor (5) einwirken kann.

## Claims

1. A self-propelled surface treating device (1), in particular a cleaning robot, with a device housing (2) and a collision detection device (4) for detecting a collision between the surface treating device (1) and an obstacle, wherein the collision detection device (4) has at least one touch-sensitive contact sensor (5), wherein the touch-sensitive contact sensor (5) is a vertical contact sensor (6), which is arranged on the device housing (2) in such a way that its detection area is vertically aligned during a movement with the surface treating device (1) conventionally oriented, so that the vertical contact sensor (6) is configured to detect a force acting vertically on the surface treating device (1), **characterized in that** the collision detection device (4) comprises two housing parts (8, 9) movable relative to each other, of which at least one is extending annularly within a horizontal plane, wherein a distance measuring device (3) designed to measure distances to obstacles is arranged inside of the annular shape as viewed in a vertical direction.

2. The surface treating device (1) according to claim 1, **characterized in that** the collision detection device (4) has two housing parts (8, 9) that can move relative to each other, of which a first housing part (8) can be displaced relative to a second housing part (9) owing to a collision with an obstacle, wherein in particular one of the housing parts (8, 9) has the vertical contact sensor (6), and the other housing part (9, 8) has an actuating device (10) for actuating the vertical contact sensor (6).

3. The surface treating device (1) according to claim 1 or 2, **characterized in that** the distance measuring device (3) is arranged in particular below the annular housing part (8, 9) relative to the vertical direction.

4. The surface treating device (1) according to claim 2 or 3, **characterized in that** the actuating device (10) has a button (11), a contact surface (20) and/or a stop (12).

5. The surface treating device (1) according to one of claims 2 to 4, **characterized in that** the first housing part (8) has the actuating device (10), and that the second housing part (9) has the vertical contact sensor (6), wherein the first housing part (8) is located above the second housing part (9) during a movement relative to a conventional orientation of the surface treating device (1).

6. The surface treating device (1) according to one of the preceding claims, **characterized in that** the vertical contact sensor (6) is located at the front on the housing part (8, 9) relative to a conventional orientation of the surface treating device (1) during a movement in the forward direction.

7. The surface treating device (1) according to one of the preceding claims, **characterized in that** the collision detection device (4) has at least one horizontal contact sensor (7), which is arranged on the device housing (2) in such a way that its detection area is aligned parallel to a direction of movement during a movement given a conventionally oriented surface treating device (1), so that the horizontal contact sensor (7) is designed to detect a force acting horizontally on the surface treating device (1).

8. The surface treating device (1) according to claim 7, **characterized by** at least two vertical contact sensors (6) and at least two horizontal contact sensors (7), which are annularly arranged on the device housing (2) in such a way as to envelop the distance measuring device (3) as viewed in a vertical direction.

9. The surface treating device (1) according to one of the preceding claims, **characterized in that** the contact sensor (5) has an electronic switch (13), an inductive or capacitive position sensor, a piezo element, a strain gauge, a conductive foam and/or a light barrier.

10. The surface treating device (1) according to one of claims 2 to 9, **characterized in that** a spring element (14) is arranged between the actuating device (10) and contact sensor (5), so that the actuating device (10) can act on the contact sensor (5) by way of the spring element (14).

## Revendications

1. Appareil de traitement du sol à déplacement automatique (1), en particulier robot de nettoyage, avec un boîtier d'appareil (2) et un dispositif de détection de collision (4) pour détecter une collision de l'appareil de traitement du sol (1) avec un obstacle, le dispositif de détection de collision (4) comprenant au moins un capteur de contact sensible au contact (5), le capteur de contact sensible au contact (5) étant un capteur de contact vertical (6) qui est joint au boîtier de l'appareil (2) de manière que sa zone de détection soit orientée verticalement lorsque l'appareil de traitement du sol (1) est dans une orientation habituelle pendant un déplacement de sorte que le capteur de contact vertical (6) est conçu pour détecter une force agissant verticalement sur l'appareil de traitement du sol (1), **caractérisé en ce que** le dispositif de détection de collision (4) présente deux parties de boîtier (8, 9) qui sont mobiles l'une par rapport à l'autre, dont au moins une est conçue pour s'étendre sous forme annulaire dans un plan horizontal, un dispositif de mesure de distance (3) conçu pour mesurer des distances à des obstacles étant, observé dans une direction verticale, agencé à l'intérieur de la forme annulaire.

2. Appareil de traitement du sol (1) selon la revendication 1, **caractérisé en ce que** le dispositif de détection de collision (4) présente deux parties de boîtier (8, 9) mobiles l'une par rapport à l'autre, dont une première partie de boîtier (8) est déplaçable relativement à une deuxième partie de boîtier (9) en conséquence d'une collision avec un obstacle, dans lequel en particulier l'une des parties de boîtier (8, 9) présente le capteur de contact vertical (6) et l'autre partie de boîtier (9, 8) présente un dispositif d'actionnement (10) pour actionner le capteur de contact vertical (6).

3. Appareil de traitement du sol (1) selon la revendication 1 ou 2, **caractérisé en ce que** le dispositif de mesure de distance (3) est agencé, par rapport à la direction verticale, au-dessous de la partie de boîtier annulaire (8, 9).

4. Appareil de traitement du sol (1) selon la revendication 2 ou 3, **caractérisé en ce que** le dispositif d'actionnement (10) présente une touche/bouton (11), une surface de contact (20) et/ou une butée (12).

5. Appareil de traitement du sol (1) selon l'une des revendications 2 à 4, **caractérisé en ce que** la première partie de boîtier (8) présente le dispositif d'actionnement (10) et que la deuxième partie de boîtier (9) présente le capteur de contact vertical (6), dans lequel la première partie de boîtier (8) est agencée, par rapport à une orientation habituelle de l'appareil de traitement du sol (1) pendant un déplacement, au-dessus de la deuxième partie de boîtier (9).

6. Appareil de traitement du sol (1) selon l'une des revendications précédentes, **caractérisé en ce que**, par rapport à une orientation habituelle de l'appareil de traitement du sol (1) lors d'un déplacement dans la direction avant, le capteur de contact vertical (6) est agencé à l'avant de la partie de boîtier (8, 9) .

7. Appareil de traitement du sol (1) selon l'une des revendications précédentes, **caractérisé en ce que** le dispositif de détection de collision (4) présente au moins un capteur de contact horizontal (7) qui est associé au boîtier d'appareil (2) de manière que, lorsque l'appareil de traitement du sol (1) est dans une orientation habituelle pendant un déplacement, sa zone de détection soit orientée parallèlement à une direction de déplacement de sorte que le capteur de contact horizontal (7) soit conçu pour détecter une force agissant horizontalement sur l'appareil de traitement du sol (1).

8. Appareil de traitement du sol (1) selon la revendication 7, **caractérisé par** au moins deux capteurs de contact vertical (6) et au moins deux capteurs de contact horizontal (7) qui sont associés sous forme annulaire au boîtier de l'appareil (2) de manière que, observé dans une direction verticale, ils entourent le dispositif de mesure de distance (3).

9. Appareil de traitement du sol (1) selon l'une des revendications précédentes, **caractérisé en ce que** le capteur de contact (5) comprend un interrupteur électronique (13), un capteur de déplacement inductif ou capacitif, un élément piézoélectrique, une jauge extensométrique, une mousse conductrice et/ou une barrière lumineuse.

10. Appareil de traitement du sol (1) selon l'une des revendications 2 à 9, **caractérisé en ce qu'**un élément élastique (14) est agencé entre le dispositif d'actionnement (10) et le capteur de contact (5) de manière que le dispositif d'actionnement (10) puisse agir sur le capteur de contact (5) par l'intermédiaire de l'élément élastique (14).
